# EUROPÄISCHE PATENTANMELDUNG

(11) **EP 4 215 739 A1**
(43) Veröffentlichungstag der Anmeldung: **26.07.2023**
(21) Anmeldenummer: 23152113.9
(22) Anmeldetag: 18.01.2023
(51) Int. Cl.: F02D 13/02, F02D 41/02, F02D 41/06, F02D 41/00

(54) **VERFAHREN ZUM BEHEIZEN EINER ABGASNACHBEHANDLUNGSKOMPONENTE SOWIE VERBRENNUNGSMOTOR**

(30) Priorität: 21.01.2022 DE 102022101345
(71) Anmelder: VOLKSWAGEN AG, 38440 Wolfsburg (DE)
(72) Erfinder: Gessenhardt, Dr. Christopher, 39356 Weferlingen (DE); Brannys, Dr. Sven, 31275 Lehrte (DE); Jakovlev, Dr. Sergej, 38100 Braunschweig (DE)
(74) Vertreter: Gulde & Partner

(57) **Zusammenfassung**

Die Erfindung betrifft ein Verfahren zum Beheizen einer Abgasnachbehandlungskomponente (48) in einer Abgasanlage (40) eines Verbrennungsmotors (10). Dabei wird ein Brennraum (12) des Verbrennungsmotors (10) durch einen verschiebbaren Kolben (70) sowie ein Einlassventil und ein Auslassventil begrenzt. An dem Brennraum (12) sind ein Kraftstoffinjektor (30) zur Einspritzung eines Kraftstoffs in den Brennraum (12) sowie eine Zündkerze (14) zur Entzündung eines brennfähiges Kraftstoff-Luft-Gemischs angeordnet. Der Verbrennungsmotor (10) weist einen Ventilhubkurvenumschaltmechanismus (38), welcher eine Verschiebung und/oder Veränderung der Öffnungszeiten des Auslassventils (22) ermöglich. Das Verfahren umfasst folgende Schritte:
- Ansaugen von Frischluft in den Brennraum (12);
- Einspritzen eines Kraftstoffs in den Brennraum (12);
- Zünden eines zündfähigen Kraftstoff-Luft-Gemischs in dem Brennraum (12), wenn sich der Kolben (70) in einem Bereich von 10° KW bis 30° KW nach dem oberen Zündtotpunkt befindet; und
- Öffnen des Auslassventils (22), wenn sich der Kolben (70) in einem Bereich von 55° KW bis 95° KW nach dem oberen Zündtotpunkt befindet.

Die Erfindung betrifft ferner einen Verbrennungsmotor (10) mit einer Abgasanlage (40) zur Durchführung eines solchen Verfahrens.

## Beschreibung

Die Erfindung betrifft ein Verfahren zum Beheizen einer Abgasnachbehandlungskomponente, insbesondere eines Drei-Wege-Katalysators, in der Abgasanlage eines Verbrennungsmotors, sowie einen Verbrennungsmotor mit einer Abgasanlage zur Durchführung eines solchen Verfahrens.

Im Hinblick auf eine weitere Verschärfung der Abgasnormen, beispielsweise mit Einführung der EU7-Norm, ist es erforderlich, insbesondere die Kaltstartemissionen, welche einen Großteil der gesamten Emissionen ausmachen, signifikant zu verringern. Im Kaltstartbetrieb, also unmittelbar nach Start des Verbrennungsmotors sind die Abgasnachbehandlungskomponenten in der Regel noch nicht hinreichend aufgewärmt, um eine Konvertierung der bei der Verbrennung des Kraftstoffs entstehenden Rohemissionen zu ermöglichen. Dies führt insbesondere zu in der Kaltstartphase erhöhten Abgasemissionen, die selbst bei einer vollständigen Konvertierung der Rohemissionen nach der Kaltstartphase dazu führen, dass die Grenzwerte nicht mehr eingehalten werden. Um dies zu vermeiden, wären bei aus dem Stand der Technik bekannten Verbrennungsmotoren mit Abgasnachbehandlungssystemen gegebenenfalls Kundenrestriktionen wie ein Abfahrverbot oder eine Einschränkung der Leistung unmittelbar nach dem Start des Verbrennungsmotors notwendig, um eine Einhaltung der EU7-Emissionsgrenzwerte unter allen geforderten Randbedingungen sicherzustellen.

Zur Erfüllung der EU6-Abgasnorm bei Ottomotoren haben sich Abgasnachbehandlungssysteme verbreitet, welche einen oder mehrere Drei-Wege-Katalysatoren sowie einen Partikelfilter umfassen. Ein Drei-Wege-Katalysator ist ein Fahrzeugkatalysator für die Abgasnachbehandlung von Verbrennungsmotoren, bei der Kohlenstoffmonoxid (CO), Stickoxide (NOx) und unverbrannte Kohlenwasserstoffe (HC) zu Kohlenstoffdioxid (CO₂), molekularem Stickstoff (N₂) und Wasserdampf (H₂O) umgewandelt werden. Aus der gleichzeitigen Umwandlung dieser drei Luftschadstoffe leitet sich der Name des Katalysators ab. Zum Aufheizen der Abgasnachbehandlungskomponenten des Verbrennungsmotors sind innermotorische Heizmaßnahmen bekannt, welche ein Verstellen des Zündwinkels in Richtung "spät", als deutlich nach dem oberen Totpunkt des Kolbens im Zündzyklus umfassen. Dabei wird der thermische Wirkungsgrad des Verbrennungsmotors abgesenkt und die Abgasenthalpie erhöht. Die hierbei erzielbare Wirkungsgradabsenkung ist durch den maximalen Spätzündwinkel durch die Laufruhe des Motors begrenzt, da die Spätverlagerung der Verbrennung mit schlechteren Entflammungs- und Verbrennungsrandbedingungen verbunden ist. Das bekannte Verfahren ist also insofern nicht zufriedenstellend, da dieses mit einer Verschlechterung der Entflammungsbedingungen aufgrund des späten Zündzeitpunktes einhergeht, wodurch der Einsatz passiver Vorkammerzündkerzen erschwert wird. Ferner ist bekannt, den Drei-Wege-Katalysator durch ein externes Heizmittel, beispielsweise ein elektrisches Heizelement oder einen Abgasbrenner zu beheizen, damit der Katalysator schneller seine Light-Off-Temperatur erreicht und schneller nach einem Kaltstart zur wirksamen Konvertierung von limitierten Emissionen zur Verfügung steht.

Nachteilig bei den aus dem Stand der Technik bekannten Abgasnachbehandlungssystemen ist jedoch, dass die bekannten innermotorischen Heizmaßnahmen voraussichtlich nicht ausreichend sind, um die Anforderungen der Abgasnorm EU7 unter allen Betriebsbedingungen zu erfüllen. Auch mit motorexternen Heizmitteln existiert ein kurzer Zeitraum, bei dem die Abgasnachbehandlungskomponenten noch nicht ihre Light-Off-Temperatur erreicht haben und die Rohemissionen unkonvertiert an die Umwelt emittiert werden. Zudem führen motorexterne Heizmittel zu einer deutlichen Verteuerung des Abgasnachbehandlungssystems.

Aus der DE 35 06 107 A1 ist ein Verfahren zur Abgasnachbehandlung eines Verbrennungsmotors bekannt, dessen Abgas nach dem Verlassen der Brennräume des Verbrennungsmotors einem Abgaskatalysator zugeführt wird. Dabei wird der Öffnungsbeginn der Auslassventile des Verbrennungsmotors in Richtung "früh" verstellt, um den Eintrag von Wärme in einen kalten Abgaskatalysator zu erhöhen.

Die DE 102 02 437 A1 beschreibt ein Verfahren und eine Vorrichtung sowie ein Computerprogramm zur Steuerung eines Verbrennungsmotors. Im Rahmen der Berechnung von Istgrößen und/oder Stellgrößen der Motorsteuerung findet ein Momentenmodell Verwendung. Dabei wird eine Korrektur eines unter Normbedingungen ermittelten Basiswertes vorgenommen. Ferner wird zur weiteren Verbesserung der Genauigkeit des Modells der Wirkungsgrad für die Umsetzung der chemischen in mechanische Energie, mit dem der optimale Momentenwert korrigiert wird, mindestens abhängig von einer den Verbrennungsschwerpunkt charakterisierenden Größe und von einer den Öffnungszeitpunkt eines auslassseitigen Gaswechselventils charakterisierenden Größe bestimmt.

Die Druckschrift DE 10 2017 208 857 A1 offenbart ein Verfahren zum Betreiben eines Verbrennungsmotors mit mindestens einem Brennraum, wobei dem Brennraum ein Einlassventil zum gesteuerten Einbringen von Frischgas in den Brennraum, ein Auslassventil zum gesteuerten Ausbringen von Abgas aus dem Brennraum, ein Injektor zum direkten Einbringen von Kraftstoff in den Brennraum und eine Zündvorrichtung zum Zünden eines Kraftstoff-Frischgas-Gemischs in dem Brennraum zugeordnet sind. Das Einlassventil und das Auslassventil sind mittels eines Ventiltriebs betätigbar, der derart ausgebildet ist, dass zumindest für das Auslassventil eine Anpassung der Ventilbetätigung möglich ist. Das Zünden des Kraftstoff-Frischgas-Gemischs wird mittels der Zündvorrichtung zu einem definierten Zündwinkel je Arbeitsspiel initiiert. Es sind ein erster Betriebszustand und ein zweiter Betriebszustand vorgesehen, wobei in dem ersten Betriebszustand einerseits das Auslassventil während eines Ausstoßtakts des Arbeitsspiels infolge einer relativ kurzen Öffnungsdauer relativ früh im Vergleich zu dem zweiten Betriebszustand geschlossen und/oder das Auslassventil während des sich an den Ausstoßtakt anschließenden Ansaugtakts ein zweites Mal geöffnet wird sowie andererseits der Zündwinkel auf relativ spät im Vergleich zu dem zweiten Betriebszustand eingestellt wird.

Aus der DE 691 14 490T2 ist eine Steuervorrichtung für einen Verbrennungsmotor bekannt, welche ferner eine Einrichtung zur Veränderung der Motorleistung des Verbrennungsmotors durch Steuerung der Öffnungsdauer der Einlassventile enthält. Die Steuervorrichtung kann sowohl bei Vergaser-, Einspritz- als auch turbogeladenen Motoren zur Optimierung der Emissionssteuerung verwendet werden. Es ist möglich, eine einzige Steuervorrichtung für verschiedene Motoranwendungen oder eine Steuereinheit mit verschiedenen Steuervorrichtungen für verschiedene Anwendungen zu verwenden.

Die DE 11 2014 000 495 T5 beschreibt ein Verfahren zum Aufheizen eines Katalysators in der Abgasanlage eines Verbrennungsmotors. Wenn der Katalysator sich in einem nicht aktivierten Zustand befindet, wird verglichen mit dem Vorliegen des katalytischen Konverters unter dem gleichen Motorbetriebszustand in einem aktivierten Zustand eine Ansaugluftmenge vergrößert und ein Zündzeitpunkt wird über einen oberen Totpunkt eines Verdichtungstakts hinaus auf spät verstellt. Der Zündzeitpunkt wird so eingestellt, dass die Spätverstellung in Abhängigkeit an die Lastanforderung des Verbrennungsmotors erfolgt. Ein Ventilöffnungsstartzeitpunkt eines Auslassventils wird so eingestellt, dass, wenn die externe Last niedriger als eine vorgegebene Referenzlast ist, das Auslassventil in gemäß Verbrennung eines bei dem vorstehenden Zündzeitpunkt gezündeten Luft/Kraftstoff-Gemisches einem folgenden Arbeitstakt zu öffnen beginnt, bevor der Zylinderinnendruck einen Höchstwert erreicht, wobei der Zylinderinnendruck auf der Annahme beruht, dass das Auslassventil in einem geschlossenen Zustand des Ventils gehalten wird.

Aus der Druckschrift US 9 810 167 B2 ist ein Verfahren zum Aufheizen eines Katalysators in der Abgasanlage eines Verbrennungsmotors bekannt. Wenn sich der Katalysator in einem nicht aktivierten Zustand befindet, wird die Ansaugluftmenge im Vergleich zu einem aktivierten Zustand des Katalysators unter denselben Motorbetriebsbedingungen erhöht, und der Zündzeitpunkt wird über den oberen Totpunkt des Verdichtungshubs hinaus verzögert. Der Zündzeitpunkt wird so eingestellt, dass sein Verzögerungsbetrag ab dem oberen Totpunkt größer wird, wenn eine externe Last, die einen Drehwiderstand des Verbrennungsmotors verursacht, geringer wird. Ein Ventilöffnungsstartzeitpunkt eines Auslassventils des Verbrennungsmotors wird so eingestellt, dass, wenn die externe Last niedriger als eine gegebene Referenzlast ist, das Ventil beginnt, sich zu öffnen, bevor ein Zylinderinnendruck einen Spitzenwert erreicht.

Der Erfindung liegt nun die Aufgabe zugrunde, das Aufheizen eines Katalysators in der Abgasanlage des Verbrennungsmotors zu beschleunigen und somit eine effizientere Abgasnachbehandlung insbesondere nach einem Kaltstart des Verbrennungsmotors zu gewährleisten.

Diese Aufgabe wird durch ein Verfahren zum Aufheizen einer Abgasnachbehandlungskomponente in der Abgasanlage eines Verbrennungsmotors gelöst. Der Verbrennungsmotor weist mindestens einen Brennraum, vorzugsweise drei oder vier Brennräume auf. Jeder Brennraum ist durch einen verschiebbaren Kolben begrenzt und weist mindestens eine Einlassöffnung auf, welche mit einem Ansaugtrakt des Verbrennungsmotors verbunden und durch ein Einlassventil verschließbar ist, sowie mindestens eine Auslassöffnung, welche mit einer Abgasanlage verbunden und durch ein Auslassventil verschließbar ist. An jedem Brennraum sind ein Kraftstoffinjektor zur Einspritzung eines Kraftstoffs in den Brennraum sowie eine Zündkerze angeordnet, welche dazu eingerichtet ist, ein brennfähiges Kraftstoff-Luft-Gemisch in dem Brennraum zu entzünden. Der Verbrennungsmotor umfasst einen Ventilhubkurvenumschaltmechanismus, welcher eine Verschiebung und/oder Veränderung der Öffnungszeiten des Auslassventils ermöglicht. Das Verfahren umfasst folgende Schritte:
- Ansaugen von Frischluft in den Brennraum,
- Einspritzen eines Kraftstoffs in den Brennraum,
- Zünden eines zündfähigen Kraftstoff-Luft-Gemischs in dem Brennraum, wenn der Kolben sich in einem Bereich von 10° KW nach dem oberen Zündtotpunkt bis 30° KW nach dem oberen Zündtotpunkt befindet, und
- Öffnen des Auslassventils, wenn sich der Kolben in einem Bereich von 55° KW bis 95° KW, vorzugsweise in einem Bereich von 70° KW bis 80° KW, nach dem oberen Zündtotpunkt befindet.

Unter einem Ventilhubkurvenumschaltmechanismus ist in diesem Zusammenhang eine Vorrichtung zu verstehen, welche eine Verstellung der Öffnungszeiten des Auslassventil des Verbrennungsmotors ermöglicht. Dies kann insbesondere ein schaltbarer Nocken mit zwei unterschiedlichen Hubkonturen oder ein Nockenwellenversteller sein, welcher die Position der Nockenwelle relativ zur Kurbelwelle verstellt und somit das Öffnungsintervall des Auslassventils in Richtung "früh" beziehungsweise in Richtung "spät" verstellt. Das Verfahren ermöglicht ein deutlich beschleunigtes Aufheizen einer Abgasnachbehandlungskomponente, insbesondere eines Katalysators, nach einem Kaltstart des Verbrennungsmotors. Somit können die Emissionen in der Kaltstartphase des Verbrennungsmotors deutlich verringert werden, wodurch auch besonders strikte Emissionsnormen wie die geplante EU7-Norm betriebssicher erfüllt werden können.

Durch die in den abhängigen Ansprüchen aufgeführten Merkmale sind vorteilhafte Weiterentwicklungen und Verbesserungen des im unabhängigen Anspruch aufgeführten Verfahrens zum Aufheizen des Katalysators möglich.

In bevorzugter Ausgestaltung der Erfindung ist vorgesehen, dass eine Auslassnockenwelle des Verbrennungsmotors eine schaltbare Nockenkontur, insbesondere einen schaltbaren Nocken, aufweist, wobei eine erste Schaltstellung der schaltbaren Nockenkontur dazu eingerichtet ist, dass beschriebene Verfahren zum beschleunigten Aufheizen der Abgasnachbehandlungskomponente durchzuführen und eine zweite Schaltstellung der schaltbaren Nockenkontur dazu eingerichtet ist, einen verbrauchsoptimierten Normalbetrieb des Verbrennungsmotors zu realisieren. Dies ermöglicht das Umschalten zwischen einer Heizstellung, in der ein besonders schnelles Aufheizen der Abgasnachbehandlungskomponente möglich ist und einem Normalbetrieb, bei dem ein besonders kraftstoffeffizienter Betrieb des Verbrennungsmotors möglich ist.

Besonders bevorzugt ist dabei, wenn die erste Schaltstellung eine längere Öffnungszeit des Auslassventils bewirkt als die zweite Schaltstellung. Unter einer längeren Öffnungszeit ist in diesem Zusammenhang zu verstehen, dass das Auslassventil in der ersten Schaltstellung über einen längeren Kurbelwinkelbereich geöffnet ist als in der zweiten Schaltstellung. Bei gleicher Drehzahl des Verbrennungsmotors in der ersten und der zweiten Schaltstellung entspricht dies auch zeitlich einer längeren Öffnungszeit. Da bei einer einfachen Verschiebung der Öffnungszeiten in Richtung "früh" das Auslassventil bereits schließen würde, bevor das Abgas in die Abgasanlage ausgeschoben wird, und somit das verbrannte Gas in dem Brennraum erneut komprimiert würde, ist es vorteilhaft, bei einem Umschalten auf einen Heizbetrieb und ein entsprechend frühes Öffnen des Auslassventils die Öffnungszeiten gegenüber dem Normalbetrieb zu verlängern. Daher ist ein Ventilhubkurvenumschaltmechanismus mit zwei unterschiedlichen Nocken, welcher im Heizbetrieb einen längeren Öffnungshub realisiert als im Normalbetrieb, gegenüber einem Nockenwellenversteller bevorzugt, welcher lediglich die Lage der Öffnungszeiten des Auslassventils verändert, die Dauer jedoch unverändert lässt.

In einer vorteilhaften Ausgestaltung des Verfahrens ist vorgesehen, dass eine Temperatur der Abgasnachbehandlungskomponente ermittelt wird und das Verfahren eingeleitet wird, wenn die ermittelte Temperatur der Abgasnachbehandlungskomponente unterhalb einer ersten Schwellentemperatur liegt. Die erste Schwellentemperatur entspricht dabei vorzugsweise einer Light-Off-Temperatur der Abgasnachbehandlungskomponente. Das Ermitteln der Temperatur der Abgasnachbehandlungskomponente kann insbesondere durch einen Temperatursensor an der Abgasnachbehandlungskomponente oder durch ein Berechnungsmodell im Steuergerät des Verbrennungsmotors erfolgen. Durch das Ermitteln einer Temperatur der Abgasnachbehandlungskomponente kann auf einfache Art und Weise bestimmt werden, ob ein zusätzliches Aufheizen der Abgasnachbehandlungskomponente beim Startvorgang des Verbrennungsmotors notwendig ist. Dies ist vorteilhaft, da somit unnötige Heizphasen, welche mit einem Kraftstoffmehrverbrauch verbunden sind, vermieden werden können.

In einer alternativen Ausgestaltung des Verfahrens ist vorgesehen, dass eine Abgastemperatur des Verbrennungsmotors erfasst wird und das Verfahren eingeleitet wird, wenn diese Abgastemperatur unterhalb einer zweiten Schwellentemperatur liegt. Da die Abgastemperatur in der Regel einfacher und schneller ermittelt werden kann als die Temperatur der Abgasnachbehandlungskomponente, jedoch ein Zusammenhang zwischen der Abgastemperatur und dem Temperatureintrag in die Abgasnachbehandlungskomponente besteht, kann auch die Abgastemperatur als Hilfsgröße ermittelt werden, um festzustellen, ob ein zusätzliches Beheizen der Abgasnachbehandlungskomponente durch das erfindungsgemäße Verfahren notwendig ist.

In einer weiteren vorteilhaften Ausgestaltung des Verfahrens ist vorgesehen, dass der Verbrennungsmotor als ein mittels eines Abgasturboladers aufgeladener Verbrennungsmotor ausgeführt ist, wobei eine Abgastemperatur stromaufwärts der Turbine des Abgasturboladers oder eine Bauteiltemperatur der Turbine des Abgasturboladers ermittelt wird, und die Heizmaßnahmen reduziert werden, wenn die Abgastemperatur stromaufwärts der Turbine oberhalb einer dritten Schwellentemperatur oder die Bauteiltemperatur der Turbine oberhalb einer vierten Schwellentemperatur liegt. Das Ermitteln der Abgastemperatur oder der Bauteiltemperatur der Turbine kann durch einen Temperatursensor oder ein Berechnungsmodell erfolgen. Durch das Reduzieren der Heizleistung kann verhindert werden, dass eine kritische Grenztemperatur des Abgasturboladers überschritten wird und es zu einer dauerhaften thermischen Schädigung des Abgasturboladers kommt.

In weiterer bevorzugter Ausgestaltung der Erfindung ist vorgesehen, dass die Öffnungszeiten des Auslassventils durch den Ventilhubkurvenumschaltmechanismus in Richtung "spät" verschoben werden, wenn die Abgasnachbehandlungskomponente eine definierte Mindesttemperatur erreicht hat. Durch ein Verschieben der Öffnungszeiten in Richtung "spät" kann der Kraftstoffverbrauch reduziert werden, wenn die Abgasnachbehandlungskomponente ihre Betriebstemperatur erreicht hat. Insbesondere erfolgt das Verschieben der Öffnungszeiten in Richtung "spät" in Kombination mit einer Verstellung des Zündwinkels in Richtung "früh" um den thermischen Wirkungsgrad des Verbrennungsmotors zu erhöhen.

In einer vorteilhaften Ausgestaltung des Verfahrens ist vorgesehen, dass das Verfahren bei einer Drehzahl des Verbrennungsmotors von maximal 2500 U/min, vorzugsweise bei maximal 1250 U/min, insbesondere bei einer Leerlaufdrehzahl oder einer angehobenen Leerlaufdrehzahl, durchgeführt wird. Um die Abgasnachbehandlungskomponente möglichst schnell aufzuheizen ist es insbesondere im Leerlauf und bei niedriger Teillast notwendig, eine entsprechende Wärmemenge in die Abgasanlage einzubringen.

Gemäß einer bevorzugten Ausgestaltung des Verfahrens ist vorgesehen, dass das Auslassventil bei der Durchführung des Verfahrens in einem Winkelbereich von 300°KW bis 380°KW nach dem oberen Zündtodpunkt geschlossen wird. Dadurch kann sichergestellt werden, dass ein Großteil des Abgases in die Abgasanlage ausgeschoben wird und genügend Zeit für einen Ladungswechsel bleibt.

Ein weiterer Teilaspekt der Erfindung betrifft einen Verbrennungsmotor mit mindestens einem Brennraum, vorzugsweise drei oder mehr Brennräumen. Jeder Brennraum ist dabei durch einen verschiebbaren Kolben begrenzt. An jedem Brennraum ist mindestens eine Einlassöffnung und mindestens eine Auslassöffnung vorgesehen, welche den Brennraum mit einem Ansaugtrakt beziehungsweise einer Abgasanlage des Verbrennungsmotors verbinden. Jede Einlassöffnung ist durch ein Einlassventil und jede Auslassöffnung durch ein Auslassventil verschließbar. An jedem Brennraum sind ein Kraftstoffinjektor zur Einspritzung eines Kraftstoffs in den Brennraum und eine Zündkerze zur Entzündung eines zündfähigen Kraftstoff-Luft-Gemischs angeordnet. Der Verbrennungsmotor weist ferner einen Ventilhubkurvenumschaltmechanismus auf, welcher eine Verschiebung und/oder Verlängerung der Öffnungszeiten des Auslassventils ermöglicht. In der Abgasanlage ist eine Abgasnachbehandlungskomponente angeordnet. Der Verbrennungsmotor steht mit einem Steuergerät in Wirkverbindung, welches dazu eingerichtet ist, ein erfindungsgemäßes Verfahren zum Beheizen der Abgasnachbehandlungskomponente durchzuführen, wenn ein in einer Speichereinheit des Steuergeräts abgelegter maschinenlesbarer Programmcode durch eine Recheneinheit des Steuergeräts ausgeführt wird.

Ein solcher Verbrennungsmotor ermöglicht es, auch ohne externe Heizmaßnahmen wie einen Abgasbrenner oder einen elektrisch beheizbaren Katalysator die Temperatur einer Abgasnachbehandlungskomponente in einem kurzen Zeitintervall auf eine Temperatur anzuheben, bei der eine effiziente Konvertierung der Schadstoffe im Abgasstrom des Verbrennungsmotors möglich ist.

In einer bevorzugten Ausgestaltung der Erfindung ist der Verbrennungsmotor als ein mittels eines Abgasturboladers aufgeladener, direkteinspritzender Ottomotor ausgeführt. Direkteinspritzende Ottomotoren sind aufgrund ihres hohen thermischen Wirkungsgrades besonders kritisch, wenn es um ein schnelles Aufheizen der Abgasnachbehandlungskomponente geht. Diese Herausforderung wird bei mittels Abgasturbolader aufgeladenen direkteinspritzenden Ottomotoren noch vergrößert, da vor dem Aufheizen der Abgasnachbehandlungskomponente zunächst noch die Turbine des Abgasturboladers erwärmt werden muss. Dabei ist das vorgeschlagene Verfahren zum Aufheizen einer Abgasnachbehandlungskomponente insbesondere bei einem mittels Abgasturbolader aufgeladenen direkteinspritzenden Ottomotor besonders vorteilhaft, um hier zeitlich begrenzt eine starke Verschlechterung des thermischen Wirkungsgrades herbeizuführen und in möglichst kurzer Zeit eine entsprechende Wärmemenge in die Abgasanlage einbringen zu können.

Gemäß einer vorteilhaften Ausgestaltung des Verbrennungsmotors ist die Zündkerze als Hakenzündkerze ausgeführt. Hakenzündkerzen sind konstruktiv einfacher und in der Herstellung kostengünstiger als Vorkammerzündkerzen. Jedoch bieten Vorkammerzündkerzen einen Vorteil in der Definition eines kleinen Zündraums und bei der Ausbreitung der Flammenfront in dem Brennraum. Das erfindungsgemäße Verfahren ist so ausgelegt, dass mit einer einfachen Hakenzündkerze betriebssicher das Kraftstoff-Luft-Gemisch im Brennraum entzündet werden kann und ein größtmöglicher Wärmeeintrag in die Abgasanlage zum Aufheizen der Abgasnachbehandlungskomponente sichergestellt ist.

In einer vorteilhaften Ausgestaltung ist die Abgasnachbehandlungskomponente ein Drei-Wege-Katalysator oder ein Vier-Wege-Katalysator. Die Konvertierung der Schadstoffe bei einem direkteinspritzenden Ottomotor erfolgt in der Regel durch einen oder mehrere Drei-Wege-Katalysator(en) und einem dem Drei-Wege-Katalysator nachgeschalteten Partikelfilter. Zur Einhaltung der Emissionsgrenzwerte ist es notwendig, zumindest einen Drei-Wege-Katalysator möglichst zeitnah auf seine Light-Off-Temperatur aufzuheizen.

Besonders bevorzugt ist dabei, wenn der Drei-Wege-Katalysator oder der Vier-Wege-Katalysator in Strömungsrichtung eines Abgasstroms des Verbrennungsmotors durch die Abgasanlage als erste emissionsmindernde Abgasnachbehandlungskomponente in einer motornahen Position in der Abgasanlage angeordnet ist. Unter einer motornahen Position ist in diesem Zusammenhang eine Position in der Abgasanlage mit einer Abgaslauflänge von maximal 80cm, vorzugsweise maximal 50cm, von einem Auslass des Verbrennungsmotors bis zum Einlass der Abgasnachbehandlungskomponente zu verstehen.

In einer vorteilhaften Ausführungsform des Verbrennungsmotors ist vorgesehen, dass der Ventilhubkurvenumschaltmechanismus einen schaltbaren Nocken aufweist, mit welchem die Öffnungszeiten des Auslassventils in einem ersten Schaltzustand des Ventilhubkurvenumschaltmechanismus ein frühes Öffnen des Auslassventils zum Aufheizen der Abgasnachbehandlungskomponente und in einem zweiten Schaltzustand ein spätes Öffnen des Auslassventils mit dem Ziel einer wirkungsgradoptimierten Verbrennung in dem Brennraum ermöglichen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen Verbrennungsmotor mit einer Abgasanlage zur Durchführung eines erfindungsgemäßen Verfahrens zum Aufheizen eines Katalysators in einer schematischen Darstellung,
- Figur 2: eine weitere schematische Darstellung eines Verbrennungsmotors zur Durchführung eines erfindungsgemäßen Verfahrens zum Aufheizen eines Katalysators,
- Figur 3: einen idealen Ottokreisprozess,
- Figur 4: eine vereinfachte Darstellung eines Brennraums eines Verbrennungsmotors zur Durchführung eines solchen Kreisprozesses,
- Figur 5: einen Verlauf von Brennraumdruck und Auslassventilhub bei der erfindungsgemäßen Durchführung eines bevorzugten Verfahrens zum Aufheizen einer Abgasnachbehandlungskomponente,
- Figur 6: Temperaturverläufe an verschiedenen Stellen in der Abgasanlage bei einem erfindungsgemäßen Verfahren zum Beheizen einer Abgasnachbehandlungskomponente und bei einem konventionellen Verfahren zum Aufheizen einer Abgasnachbehandlungskomponente.

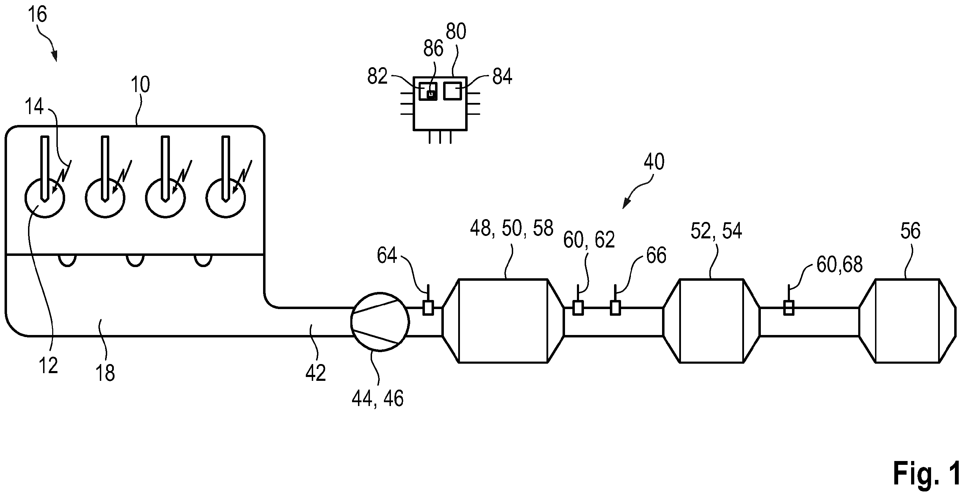

Figur 1 zeigt einen Verbrennungsmotor 10 mit mindestens einem Brennraum 12, vorzugsweise wie in Figur 1 dargestellt mit mindestens drei Brennräumen 12. Der Verbrennungsmotor 10 ist als direkteinspritzender Ottomotor ausgeführt. Dazu sind an jedem Brennraum 12 eine Zündkerze 14, vorzugsweise eine Hakenzündkerze 34, zur Entzündung eines zündfähigen Kraftstoff-Luft-Gemisches und ein Kraftstoffinjektor 30 zum Einspritzen eines Kraftstoffs in den jeweiligen Brennraum 12 angeordnet. Jeder Brennraum 12 ist über mindestens eine Einlassöffnung 16 mit einem nicht dargestellten Ansaugtrakt und über mindestens eine Auslassöffnung 18 mit einer Abgasanlage 40 verbunden. Eine fluidische Verbindung von dem Ansaugtrakt in den Brennraum 12 kann durch ein Einlassventil 20 verschlossen werden. Eine fluidische Verbindung von dem Brennraum 12 in die Abgasanlage 40 kann durch ein Auslassventil 22 verschlossen werden.

Die Abgasanlage 40 umfasst einen Abgaskanal 42, in welchem in Strömungsrichtung eines Abgasstroms des Verbrennungsmotors 10 durch die Abgasanlage 40 eine Turbine 46 eines Abgasturboladers 44 und stromabwärts der Turbine 46 mindestens eine Abgasnachbehandlungskomponente 48 angeordnet sind. Bevorzugt sind wie in Figur 1 dargestellt stromabwärts der Turbine ein erster Drei-Wege-Katalysator 50 und stromabwärts des ersten Drei-Wege-Katalysators 50 mindestens eine weitere Abgasnachbehandlungskomponente 52, insbesondere ein zweiter Drei-Wege-Katalysator 54, ein Oxidationskatalysator 58 und/oder ein Partikelfilter 56 angeordnet. Der zweite Drei-Wege-Katalysator 54 und der Partikelfilter 56 können auch in einem Bauteil zusammengefasst als sogenannter Vier-Wege-Katalysator ausgeführt sein. Ferner können in der Abgasanlage 40 ein oder mehrere Abgassensoren 60 zur Überwachung der Funktionsfähigkeit der Abgasnachbehandlungskomponente 48, 52 angeordnet sein. Bevorzugt sind in der Abgasanlage 40 stromaufwärts des ersten Drei-Wege-Katalysators 50 eine erste Lambdasonde 64 und stromabwärts des ersten Drei-Wege-Katalysators 50 eine zweite Lambdasonde 66 sowie ein Temperatursensor 62 sowie gegebenenfalls ein Schadstoffsensor 68 angeordnet.

Der Verbrennungsmotor 10 steht mit einem Steuergerät 80 in Wirkverbindung, welches eine Speichereinheit 82 und eine Recheneinheit 84 umfasst. In der Speichereinheit 82 sind ein oder mehrere maschinenlesbare Programmcodes 86 zur Steuerung des Verbrennungsmotors 10, insbesondere zur Steuerung des Zündzeitpunktes der Zündkerze 14, der Einspritzmenge und des Einspritzzeitpunktes des Kraftstoffinjektors 30 und zur Steuerung der Öffnungszeiten der Ventile 20, 22 abgelegt.

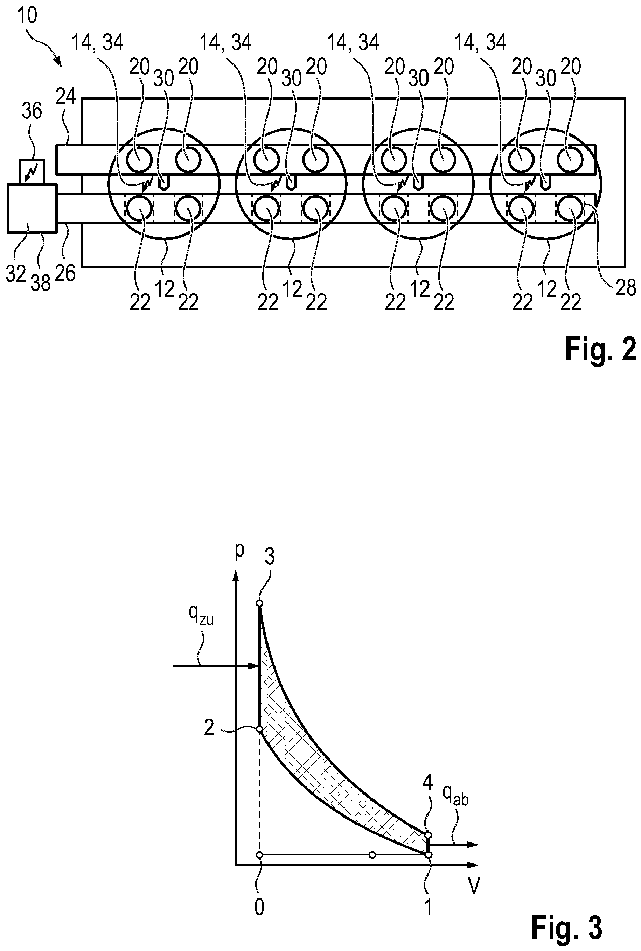

In Figur 2 ist der Verbrennungsmotor 10 in einer weiteren schematischen Darstellung gezeigt. Die Öffnungszeiten der Einlassventile 16 werden durch eine Einlassnockenwelle 24 gesteuert. Die Öffnungszeiten der Auslassventile 18 werden durch eine Auslassnockenwelle 26 gesteuert. Dabei ist an der Auslassnockenwelle 26 ein Ventilhubkurvenumschaltmechanismus 38 vorgesehen, mit welcher eine schaltbare Nockenkontur 28, welche über einen Schaltmechanismus 36 aktiviert werden kann, zwischen einer ersten Öffnungskurve der Auslassventile 22 und einer zweiten Öffnungskurve der Auslassventile 22 umschalten kann.

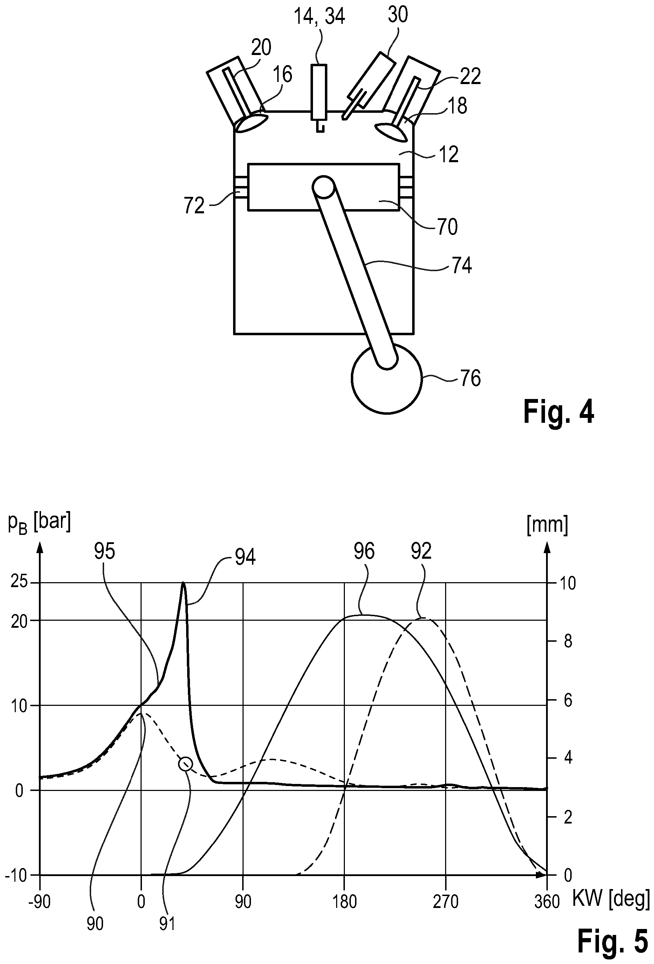

Figur 3 zeigt schematisch einen idealen Ottokreisprozess, welcher eine theoretische Grundlage für das erfindungsgemäße Verfahren liefert. Figur 4 zeigt schematisch einen Brennraum 12 eines Verbrennungsmotors 10 mit einem Kolben 70, welcher über eine Pleuelstange 74 mit einer Kurbelwelle 76 zur Durchführung für einen solchen Kreisprozess verbunden ist. Dabei ist der Brennraum 12 durch Kolbenringe 72 abgedichtet, welche einen Spalt zwischen dem Kolben und einer Zylinderwand des Brennraums 12 abdichten und an der Zylinderwand anliegen. Ferner sind in Figur 4 das Kompressionsvolumen V_{K} und der Hubvolumen V_{H} dargestellt. Bei einem solchen idealen Prozess sind keine Dissipationsverluste, mechanische Reibungsverluste oder dergleichen berücksichtigt. Ferner hat das Arbeitsgas über den gesamten Kreisprozess die gleichen Eigenschaften und Strömungsverluste werden nicht berücksichtigt. Ferner wird keine Durchmischung von Ladungsgemisch mit Abgas angenommen.

Bevorzugt betrifft die Erfindung ein Verfahren für einen direkteinspritzenden, mittels eines Abgasturboladers 44 aufgeladenen Viertakt-Ottomotor. Ein Takt besteht jeweils aus einem Kolbenhub des Kolbens 70 beziehungsweise einer halben Kurbelwellenumdrehung. Beim Viertakt-Ottomotor lassen sich die Zustandsänderungen den Arbeitstakten zuordnen. Dies ist im Folgenden anhand der Figur 3 beschrieben:
Der erste Takt, der Ansaugtakt, umfasst das Ansaugen, bei dem der Kolben 70 sich nach unten in Figur 4 bewegt und der Brennraum 12 sich mit Frischluft füllt. Dies entspricht im Diagramm der Verbindungslinie zwischen den Punkten 0 und 1.

Der zweite Takt, der Verdichtungs- oder Kompressionstakt, umfasst das Verdichten der Brennraumladung, wobei sich der Kolben 70 in Figur 4 nach links bewegt. Dies entspricht im Diagramm der isentropen Verbindungslinie zwischen den Punkten 1 und 2 und die isochore Wärmezufuhr qzu erfolgt durch Zünden und Verbrennen der Gasladung, was der Verbindungslinie zwischen den Punkten 2 und 3 entspricht (Gleichraumverbrennung).

Der dritte Takt, der Expansions- oder Arbeitstakt, umfasst die isentrope Expansion, wobei der Kolben 70 infolge der exothermen Verbrennung wieder nach unten bewegt wird. Dies entspricht im Diagramm der Verbindungslinie zwischen den Punkten 3 und 4.

Der vierte Takt wird auch als Auslasstakt (Wärmeabfuhr) bezeichnet, wobei der Kolben 70 sich wieder nach links bewegt durch das Öffnen des Auslassventils 22 die Abgase im unteren Totpunkt ohne weitere Arbeitsleistung nach außen expandieren (Verbindungslinie zwischen den Punkten 4 und 1) und der Rest des Abgases durch den Kolbenhub (Verbindunglinie zwischen den Punkten 1 und 0) nach außen geschoben wird. Dabei wird die im Abgas enthaltene Wärme q_{Ab} an die Umgebung abgegeben. Der ideale Prozess berücksichtigt nicht, dass die Restmenge im Kompressionsraum nicht den Umgebungszustand erreicht.

Figur 5 zeigt nun den Verlauf von Brennraumdruck und Auslassventilhub gemäß einer bevorzugten Ausführungsform der Erfindung und eines konventionellen Verfahrens zum Katalysatorheizen.

Die Kurve mit dem Bezugszeichen 90 zeigt hierbei den Verlauf des Brennraumdrucks und das Bezugszeichen 92 den Verlauf des Ventilhubs des Auslassventils 12 bei dem konventionellem Katalysatorheizbetrieb, welcher aus dem Stand der Technik bekannt ist.

Ferner zeigt die Kurve mit dem Bezugszeichen 94 den Verlauf des Brennraumdrucks bei erfindungsgemäßem Katalysatorheizbetrieb, während das Bezugszeichen 96 auf eine Kurve gerichtet ist, welche den Verlauf des Ventilhubs des Auslassventils 12 bei dem erfindungsgemäßen Katalysatorheizbetrieb beschreibt.

Bei dem bekannten Verfahren zur Beheizung eines Katalysators eines Otto-Verbrennungsmotors erfolgt die Zündung 91 der Gasladung in einem der Zylinder relativ spät nach dem oberen Zündtotpunkt, beispielsweise 40°KW nach dem oberen Zündtodpunkt, während das Auslassöffnen des Auslassventils 22 des Auslasses des Brennraums 12 ebenfalls spät, beispielsweise 155°KW - 175°KW nach dem oberen Zündtotpunkt, erfolgt.

Bei dem erfindungsgemäßen Verfahren zur Beheizung einer Abgasnachbehandlungskomponente 48, insbesondere eines Drei-Wege-Katalysators 50 in der Abgasanlage 40 eines direkteinspritzenden Ottomotors 10 mit mindestens einem Brennraum 12, erfolgt die Zündung 95 der Gasladung in dem Brennraum 12 in einem Winkelbereich von 10°KW nach dem oberen Zündtotpunkt bis 30°KW nach dem oberen Zündtotpunkt, während das Öffnen des Auslassventils 22 in einem Winkelbereich von 55°KW bis 95°KW nach dem oberen Zündtotpunkt erfolgt.

Eine Darstellung des frühen Auslassöffnen kann hier durch den Ventilhubkurvenumschaltmechanismus 38, insbesondere durch eine schaltbare Nockenkontur 28 erfolgen.

Alternativ kann das Umschalten zwischen einem Heizbetrieb und einem Normalbetrieb durch einen Auslassnockenwellenphasensteller mit sehr breitem Stellbereich erfolgen, wobei ein Verstellbereich von wenigstens 120°KW angenommen wird, und eine Nockenkontur, die auch außerhalb des Heizbetriebs genutzt wird.

Bevorzugt weist die Auslassnockenwelle 26 eine schaltbare Nockenkontur 28 auf, wobei die Nockenkontur, welche den Heizbetrieb realisiert über einen größeren Öffnungsbereich als die Nockenkontur für den Normalbetrieb verfügt. Vorzugsweise weist die Nockenkontur für den Heizbetrieb eine Auslassventilerhebungskurve mit einer Steuerbreite von 250° bis 290°KW, bevorzugt von etwa 270°KW, bezogen auf einen Ventilhub von mindestens 1mm auf.

Die Ausführungsform mit einer schaltbaren Nockenkontur 28 und einer Steuerbreite von 250° bis 290°KW ist besonders bevorzugt, da diese die betriebspunktoptimale Gestaltung des Auslassöffnungs- und Schließzeitpunktes ermöglicht. Gegenüber der Ausführungsform mit einem Nockenwellenversteller mit großem Verstellbereich können die hiermit verbundenen Nachteile dahingehend verhindert werden, dass diese Ausführungsform aufgrund des zwangsläufig sehr frühen Auslassschluss eine hohe Restgasrate im Brennraum 12 aufweist, womit ein reduzierter Luftdurchsatz und suboptimale Entflammungsbedingungen im Brennraum 12 einhergehen.

Das erfindungsgemäße Verfahren resultiert in einer deutlich erhöhten Abgasenthalpie. Um auch bei einem so späten Zündzeitpunkt ein sicheres Entflammen des im Brennraum 12 befindlichen Kraftstoff-Luft-Gemischs sicherstellen zu können, wird die Verwendung einer Hakenzündkerze 34 gegenüber einer Vorkammerzündkerze bevorzugt, da eine Vorkammerzündkerze bei den beschriebenen Öffnungs- und Zündzeitpunkten gegebenenfalls nicht eine Entflammung des Kraftstoff-Luft-Gemischs sicherstellen kann.

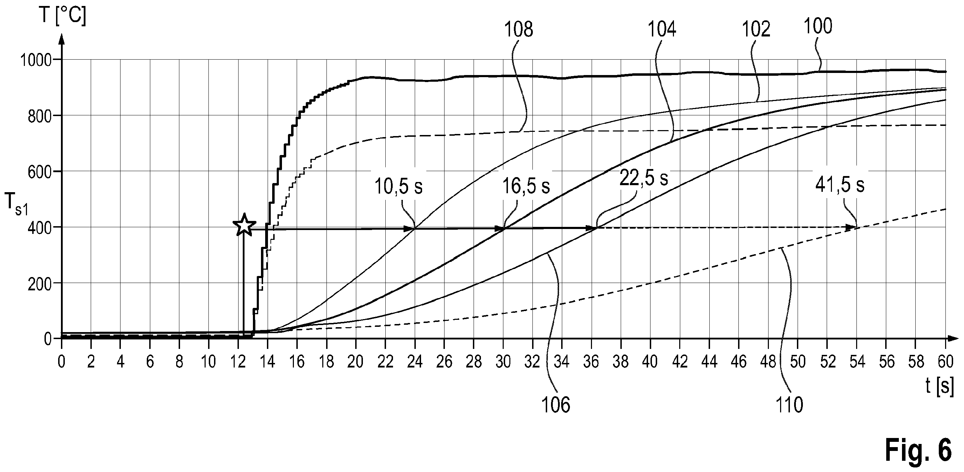

In Figur 6 sind Temperaturverläufe in der Abgasanlage bei einem erfindungsgemäßen Verfahren zum Beheizen der Abgasnachbehandlungskomponente und bei einem konventionellen Verfahren zum Aufheizen einer Abgasnachbehandlungskomponente dargestellt. Dabei zeigt die Kurve 100 den zeitlichen Verlauf einer Abgastemperatur des Verbrennungsmotors 10 vor Eintritt in die Turbine 46 des Abgasturboladers 44 bei einem erfindungsgemäßen Verfahren zum Aufheizen einer Abgasnachbehandlungskomponente 48. Die Kurve 102 zeigt den zeitlichen Verlauf einer Temperatur am Eintritt eines motornahen Drei-Wege-Katalysators 50. Die Kurve 104 zeigt den zeitlichen Temperaturverlauf in der Mitte des motornahen Drei-Wege-Katalysators 50 und die Kurve 106 am Austritt des motornahen Drei-Wege-Katalysators 50. Die Kurve 108 stellt den zeitlichen Verlauf einer Abgastemperatur vor Eintritt in die Turbine 46 des Abgasturboladers 44 bei einem aus dem Stand der Technik bekannten konventionellen innermotorischen Heizverfahren zum Aufheizen einer Abgasnachbehandlungskomponente dar. Die Kurve 110 zeigt den zeitlichen Temperaturverlauf in der Mitte des motornahen Drei-Wege-Katalysators 50 bei einem konventionellen innermotorischen Heizverfahren. Aus einem Vergleich der Kurven 104 und 110 ist zu erkennen, dass die Mitte des Drei-Wege-Katalysators 50 bei dem erfindungsgemäßen Verfahren deutlich schneller eine erste Schwellentemperatur Ts, erreicht als bei dem konventionellen innermotorischen Heizverfahren.

### Bezugszeichenliste

- 10: Verbrennungsmotor
- 12: Brennraum
- 14: Zündkerze
- 16: Einlassöffnung
- 18: Auslassöffnung

- 20: Einlassventil
- 22: Auslassventil
- 24: Einlassnockenwelle
- 26: Auslassnockenwelle
- 28: zuschaltbarer Nocken

- 30: Kraftstoffinjektor
- 32: Nockenwellenversteller
- 34: Hakenzündkerze
- 36: Schaltmechanismus für zuschaltbaren Nocken
- 38: Ventilhubkurvenumschaltmechanismus

- 40: Abgasanlage
- 42: Abgaskanal
- 44: Abgasturbolader
- 46: Turbine
- 48: Abgasnachbehandlungskomponente

- 50: Drei-Wege-Katalysator
- 52: weitere Abgasnachbehandlungskomponente
- 54: zweiter Drei-Wege-Katalysator
- 56: Partikelfilter
- 58: Oxidationskatalysator
- 60: Abgassensor
- 62: Temperatursensor
- 64: erste Lambdasonde
- 66: zweite Lambdasonde
- 68: Schadstoffsensor

- 70: Kolben
- 72: Kolbenringe
- 74: Pleuelstange
- 76: Kurbelwelle

- 80: Steuergerät
- 82: Speichereinheit
- 84: Recheneinheit
- 86: maschinenlesbarer Programmcode

- 90: Brennraumdruck (konventionell)
- 91: Zündung konventionelles Katalysatorheizen
- 92: Ventilhub Auslassventil (konventionell)
- 94: Brennraumdruck (neu)
- 95: Zündung (neu)
- 96: Ventilhub (neu)

- 100: Temperatur vor Turbine (neu)
- 102: Temperatur Einlass Drei-Wege-Katalysator (neu)
- 104: Temperatur Mitte Drei-Wege-Katalysator (neu)
- 106: Temperatur Austritt Drei-Wege-Katalysator (neu)
- 108: Temperatur vor Turbine (konventionell)

- 110: Temperatur Mitte Drei-Wege-Katalysator (konventionell)

## Patentansprüche

1. Verfahren zum Beheizen einer Abgasnachbehandlungskomponente (48) in einer Abgasanlage (40) eines Verbrennungsmotors (10) mit mindestens einem Brennraum (12), wobei der Brennraum (12) durch einen verschiebbaren Kolben (70) begrenzt ist und eine Einlassöffnung (16) aufweist, welche mit einem Ansaugtrakt des Verbrennungsmotors (10) verbunden ist und durch ein Einlassventil (20) verschließbar ist, und eine Auslassöffnung (18) aufweist, welche mit einer Abgasanlage (40) verbunden ist und durch ein Auslassventil (22) verschließbar ist, wobei an dem Brennraum (12) ein Kraftstoffinjektor (30) zur Einspritzung eines Kraftstoffs in den Brennraum (12) angeordnet ist, sowie mit einer Zündkerze (14), welche dazu eingerichtet ist, ein brennfähiges Kraftstoff-Luft-Gemisch in dem Brennraum (12) zu entzünden, sowie mit einem Ventilhubkurvenumschaltmechanismus (38), welcher eine Verschiebung und/oder Veränderung der Öffnungszeiten des Auslassventils (22) ermöglicht, umfassend folgende Schritte:
- Ansaugen von Frischluft in den Brennraum (12);
- Einspritzen eines Kraftstoffs in den Brennraum (12);
- Zünden eines zündfähigen Kraftstoff-Luft-Gemischs in dem Brennraum (12), wenn der Kolben (70) sich in einem Bereich von 10° KW bis 30° KW nach dem oberen Zündtotpunkt befindet; und
- Öffnen des Auslassventils (22), wenn sich der Kolben (70) in einem Bereich von 55° KW bis 95° KW nach dem oberen Zündtotpunkt befindet.

2. Verfahren nach Anspruch 1, **dadurch gekennzeichnet, dass** eine Auslassnockenwelle (26) eine schaltbare Nockenkontur, insbesondere einen schaltbaren Nocken (28) aufweist, wobei eine erste Schaltstellung der schaltbaren Nockenkontur dazu eingerichtet ist, dass beschriebene Verfahren durchzuführen und eine zweite Schaltstellung der schaltbaren Nockenkontur dazu eingerichtet ist, einen verbrauchsoptimierten Normalbetrieb des Verbrennungsmotors (10) zu realisieren.

3. Verfahren nach Anspruch 2, **dadurch gekennzeichnet, dass** die erste Schaltstellung eine längere Öffnungszeit des Auslassventils (22) bewirkt als die zweite Schaltstellung.

4. Verfahren nach einem der Ansprüche 1 bis 3, **dadurch gekennzeichnet, dass** eine Temperatur der Abgasnachbehandlungskomponente (48) ermittelt wird und das Verfahren eingeleitet wird, wenn die ermittelte Temperatur der Abgasnachbehandlungskomponente (48) unterhalb einer ersten Schwellentemperatur liegt.

5. Verfahren nach einem der Ansprüche 1 bis 4, **dadurch gekennzeichnet, dass** der Verbrennungsmotor (10) als ein mittels eines Abgasturboladers (44) aufgeladener Verbrennungsmotor (10) ausgeführt ist, wobei eine Abgastemperatur (T_{EG}) stromaufwärts einer Turbine (46) des Abgasturboladers (44) oder eine Bauteiltemperatur (T_{T}) der Turbine (46) des Abgasturboladers (44) ermittelt wird, und die Heizmaßnahmen reduziert werden, wenn die Abgastemperatur (T_{EG}) stromaufwärts der Turbine (46) oberhalb einer dritten Schwellentemperatur oder die Bauteiltemperatur (T_{T}) der Turbine (46) oberhalb einer vierten Schwellentemperatur liegt.

6. Verfahren nach einem der Ansprüche 1 bis 5, **dadurch gekennzeichnet, dass** die Öffnungszeiten des Auslassventils (22) durch den Ventilhubkurvenumschaltmechanismus (38) in Richtung "spät" verschoben werden, wenn die Abgasnachbehandlungskomponente (48) eine definierte Mindesttemperatur erreicht hat.

7. Verfahren nach einem der Ansprüche 1 bis 6, **dadurch gekennzeichnet, dass** das Verfahren bei einer Drehzahl des Verbrennungsmotors (10) von maximal 2500 U/min durchgeführt wird.

8. Verfahren nach einem der Ansprüche 1 bis 7, **dadurch gekennzeichnet, dass** das Auslassventil (22) bei der Durchführung des Verfahrens mit einem Winkelbereich von 300°KW nach dem oberen Zündtodpunkt bis 380°KW nach dem oberen Zündtodpunkt geschlossen wird.

9. Verfahren nach einem der Ansprüche 1 bis 8, **dadurch gekennzeichnet, dass** ein Nocken zur Ansteuerung des Auslassventils (22) eine Auslassventilerhebungskurve mit einer Steuerbreite von 250°KW bis 290°KW aufweist und dass Auslassventil (22) über diese Steuerbreite mindestens 1mm aus seinem Sitz angehoben wird.

10. Verbrennungsmotor (10) mit
- mindestens einem Brennraum (12), wobei der Brennraum (12) durch einen verschiebbaren Kolben (70) begrenzt ist und eine Einlassöffnung (16) aufweist, welche mit einem Ansaugtrakt des Verbrennungsmotors (10) verbunden ist und durch ein Einlassventil (20) verschließbar ist, und eine Auslassöffnung (18) aufweist, welche mit einer Abgasanlage (40) verbunden ist und durch ein Auslassventil (22) verschließbar ist, und an dem Brennraum (12) ein Kraftstoffinjektor (30) zur Einspritzung eines Kraftstoffs in den Brennraum (12) angeordnet ist,
- einer Zündkerze (14), welche dazu eingerichtet ist, ein brennfähiges Kraftstoff-Luft-Gemisch in dem Brennraum (12) zu entzünden, sowie
- einem Ventilhubkurvenumschaltmechanismus (38), welcher eine Verschiebung und/oder Veränderung der Öffnungszeiten des Auslassventils (22) ermöglicht,
- einer in der Abgasanlage (40) angeordneten Abgasnachbehandlungskomponente (48), und
- einem Steuergerät (80), welches dazu eingerichtet ist, ein Verfahren nach einem der Ansprüche 1 bis 9 auszuführen, wenn ein in einer Speichereinheit (82) des Steuergeräts (80) abgelegter maschinenlesbarer Programmcode (86) durch eine Recheneinheit (84) des Steuergeräts (80) ausgeführt wird.

11. Verbrennungsmotor (10) nach Anspruch 10, **dadurch gekennzeichnet, dass** der Verbrennungsmotor (10) ein mittels eines Abgasturboladers (44) aufgeladener, direkteinspritzender Ottomotor ist.

12. Verbrennungsmotor (10) nach Anspruch 10 oder 11, **dadurch gekennzeichnet, dass** die Zündkerze (14) eine Hakenzündkerze (34) ist.

13. Verbrennungsmotor (10) nach einem der Ansprüche 10 bis 12, **dadurch gekennzeichnet, dass** die Abgasnachbehandlungskomponente (48) ein Drei-Wege-Katalysator (50) ist.

14. Verbrennungsmotor (10) nach Anspruch 14, **dadurch gekennzeichnet, dass** der Drei-Wege-Katalysator (50) in Strömungsrichtung eines Abgasstroms des Verbrennungsmotors (10) als erste emissionsmindernde Abgasnachbehandlungskomponente (48) in der Abgasanlage (40) in einer motornahen Position angeordnet ist.

15. Verbrennungsmotor (10) nach einem der Ansprüche 10 bis 14, **dadurch gekennzeichnet, dass** der Ventilhubumschaltmechanismus (38) einen schaltbaren Nocken (28) aufweist, mit welchem die Öffnungszeiten des Auslassventils (22) in einem ersten Schaltzustand des Ventilhubumschaltmechanismus (38) ein frühes Öffnen des Auslassventils (22) zum Aufheizen der Abgasnachbehandlungskomponente (48) und in einem zweiten Schaltzustand ein spätes Öffnen des Auslassventils (22) mit dem Ziel einer wirkungsgradoptimierten Verbrennung in dem Brennraum (12) ermöglichen.
